# EUROPÄISCHE PATENTANMELDUNG

(11) **EP 1 612 531 A2**
(43) Veröffentlichungstag der Anmeldung: **04.01.2006**
(21) Anmeldenummer: 05013190.3
(22) Anmeldetag: 18.06.2005
(51) Int. Cl.: G01L 9/00

(54) **Mikromechanische Struktur**

(30) Priorität: 23.06.2004 DE 102004030380
(71) Anmelder: EADS Deutschland GmbH, 85521 Ottobrunn (DE)
(72) Erfinder: Friedberger, Alois, Dr., 85625 Glonn (DE)

(57) **Zusammenfassung**

Es werden eine mikromechanische Membran- oder Brückenstruktur, insbesondere ein mikromechanischer Sensor oder Aktor, sowie ein Verfahren zum Selbsttest einer solchen beschrieben. Erfindungsgemäß ist es vorgesehen, dass mittels einer an der mikromechanischen Membran- oder Brückenstruktur (11) vorgesehenen Wandlerstruktur (13, 14) in Ansprache auf ein von außen zugeführtes Signal vorgegebener Art und Größe eine mechanische Verformung der mikromechanischen Membran- oder Brückenstruktur (11; 21) erzeugt wird, dass die mechanische Verformung der mikromechanischen Membran- oder Brückenstruktur (11; 21; 31; 41; 51) erfasst wird. Die erfasste mechanische Verformung kann mit einem für das von außen zugeführte Signal bestimmter Art und Größe erwarteten Wert der mechanischen Verformung verglichen und ein das Ergebnis des Vergleichs anzeigendes Selbsttest-Ergebnissignal erzeugt werden.

## Beschreibung

Die Erfindung betrifft eine mikromechanische Membran- oder Brückenstruktur, insbesondere einen mikromechanischer Sensor oder Aktor, und ein Verfahren zum Selbsttest einer solchen.

Mikromechanische Membran- oder Brückenstrukturen finden häufig Verwendung bei hochentwickelten technischen Produkten. Beispielsweise werden sie als mikromechanische Sensoren oder Aktoren in der Luft- und Raumfahrt verwendet. Dort sind hohe Zuverlässigkeit und niedrige Ausfallraten von großer Wichtigkeit. Kommt es trotzdem zu einem Ausfall, wäre eine sofortige Fehlermeldung durch eingebaute Selbsttestfähigkeit von großem Vorteil. Ebenso ist in vielen Anwendungsfällen eine automatische Kalibrierung vorteilhaft.

Die Aufgabe der Erfindung ist es eine mikromechanische Membran- oder Brückenstruktur zu schaffen, welche selbsttestfähig ist. Weiterhin soll durch die Erfindung ein Verfahren angegeben werden, mit welchem eine mikromechanische Membran- oder Brückenstruktur einem Selbsttest unterzogen werden kann.

Die Aufgabe wird durch eine mikromechanische Membran- oder Brückenstruktur mit den Merkmalen des Anspruchs 1 gelöst. Weiterhin wird die Erfindung gelöst durch ein Verfahren zum Selbsttest einer mikromechanischen Membran- oder Brückenstruktur mit den Merkmalen des Anspruchs 19.

Vorteilhafte Weiterbildungen sind in den jeweiligen Unteransprüchen angegeben.

Besonders vorteilhaft ist die Anwendung der Erfindung auf mikromechanische Sensoren oder Aktoren.

Gemäß einer vorteilhaften Weiterbildung der Erfindung ist eine automatische Kalibrierung der mikromechanischen Membran- oder Brückenstruktur unter Verwendung eines zum Zwecke der Verformung von außen zugeführten Erregungssignals und der erfaßten Verformung vorgesehen.

Im folgenden werden Ausführungsbeispiele der Erfindung anhand der Zeichnung erläutert.

Es zeigt:
**Figur 1** eine etwas schematisierte vergrößerte Querschnittsansicht einer mikromechanischen Membran- oder Brückenstruktur in Form eines mikromechanischen Sensors gemäß einem ersten Ausführungsbeispiel der Erfindung;
**Figur 2a) und b)** eine etwas schematisierte vergrößerte Querschnittsansicht bzw. Draufsicht einer mikromechanischen Membran- oder Brückenstruktur in Form eines mikromechanischen Sensors gemäß einem zweiten Ausführungsbeispiel der Erfindung;
**Figur 3a) und b)** eine etwas schematisierte vergrößerte Querschnittsansicht bzw. Draufsicht einer mikromechanischen Membran- oder Brückenstruktur in Form eines mikromechanischen Sensors gemäß einem dritten Ausführungsbeispiel der Erfindung;
**Figur 4** eine etwas schematisierte vergrößerte Querschnittsansicht einer mikromechanischen Membran- oder Brückenstruktur in Form eines mikromechanischen Sensors gemäß einem vierten Ausführungsbeispiel der Erfindung;
**Figur 5** eine etwas schematisierte vergrößerte Querschnittsansicht einer mikromechanischen Membran- oder Brückenstruktur in Form eines mikromechanischen Sensors gemäß einem fünften Ausführungsbeispiel der Erfindung;
**Figur 6** eine etwas schematisierte Darstellung einer mikromechanischen Membran- oder Brückenstruktur in Form eines mikromechanischen Sensors und einer Wandlereinrichtung zum Erfassen der Verformung der mikromechanischen Membran- oder Brückenstruktur gemäß einem Ausführungsbeispiel der Erfindung;
**Figur 7** eine etwas schematisierte vergrößerte Querschnittsansicht einer mikromechanischen Membran- oder Brückenstruktur in Form eines mikromechanischen Sensors mit einer Wandlereinrichtung zum Erfassen der Verformung der mikromechanischen Membran- oder Brückenstruktur gemäß einem weiteren Ausführungsbeispiel der Erfindung; und
**Figur 8** ein vereinfachtes schematisiertes Blockschaltbild einer mikromechanischen Membran- oder Brückenstruktur zur Erläuterung von Selbsttest- und Kalibrierungsfunktionen an der mikromechanischen Membran- oder Brückenstruktur.

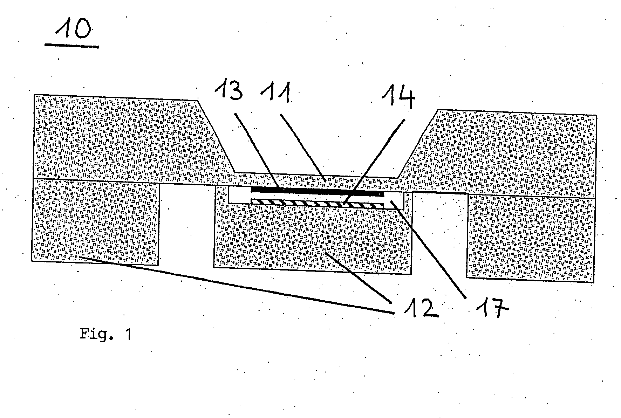

In den Figuren 1 bis 8 sind verschiedene Ausführungsbeispiele von mikromechanischen Sensoren 10; 20; 30; 40; 50 dargestellt, welche der Druckmessung etwa im Bereich der Luft- und Raumfahrt dienen. Der mikromechanische Sensor 10; 20; 30; 40; 50 umfasst eine mikromechanische Membran- oder Brückenstruktur 11; 21; 31; 41; 51, welche auf einem Trägerteil 12; 22; 32; 42; 52 angeordnet ist. Zwischen der mikromechanischen Membran- oder Brückenstruktur 11; 21; 31; 41; 51 und dem Trägerteil 12; 22; 32; 42; 52 ist ein geschlossener Hohlraum 17; 27; 37; 47; 57 gebildet, welcher durch eine Seite der mikromechanischen Membran- oder Brückenstruktur 11; 21; 31; 41; 51 begrenzt ist. Die Druckmessung erfolgt durch Erfassen der Verformung der mikromechanischen Membran- oder Brückenstruktur 11; 21; 31; 41; 51 zwischen einerseits einem in dem Hohlraum 17; 27; 37; 47; 57 vorhandenen Medium und andererseits einem Medium, welches sich an der dem Hohlraum 17; 27; 37; 47; 57 gegenüberliegenden Seite der mikromechanischen Membran- oder Brückenstruktur 11; 21; 31; 41; 51 befindet. Auf diese Weise kann der mikromechanische Sensor 10; 20; 30; 40; 50 sowohl für Absolut- wie auch für Relativ-Druckmessungen verwendet werden.

Die mechanische Verformung der mikromechanischen Membran- oder Brückenstruktur auf Grund des Druckunterschieds zwischen deren beiden Seiten kann auf verschiedene Weise erfasst werden, beispielsweise kapazitiv, piezoelektrisch, optisch oder auf eine andere Weise, wie es an sich im Stande der Technik bekannt ist.

Zum Zwecke des Selbsttests und/oder einer automatischen Kalibrierung der mikromechanischen Membran- oder Brückenstruktur ist bei den in den Figuren 1 bis 5 dargestellten Ausführungsbeispielen eine Wandlerstruktur 13, 14; 23, 24; 33; 43; 53, 54 vorgesehen, welche zur Erzeugung einer mechanischen Verformung der mikromechanischen Membran- oder Brückenstruktur 11; 21; 31; 41; 51 in Ansprache auf ein von außen zugeführtes Erregungssignal vorgegebener Art und Größe dient.

Bei dem in Figur 1 dargestellten Ausführungsbeispiel ist diese Wandlerstruktur durch Elektroden 13, 14 gebildet, von denen eine Elektrode 13 an der dem Trägerteil 12 zugewandten Seite der mikromechanischen Membran- oder Brückenstruktur 11 angebracht ist und eine andere Elektrode 14 gegenüberliegend an dem Trägerteil 12 selbst angebracht ist. Durch Anlegen einer Gleich- oder Wechselspannung vorgegebener Art und Größe als Erregungssignal erfolgt eine mechanische Verformung der mikromechanischen Membran- oder Brückenstruktur 11 auf Grund elektrostatischer Anziehung bzw. Abstoßung zwischen den Elektroden 13, 14.

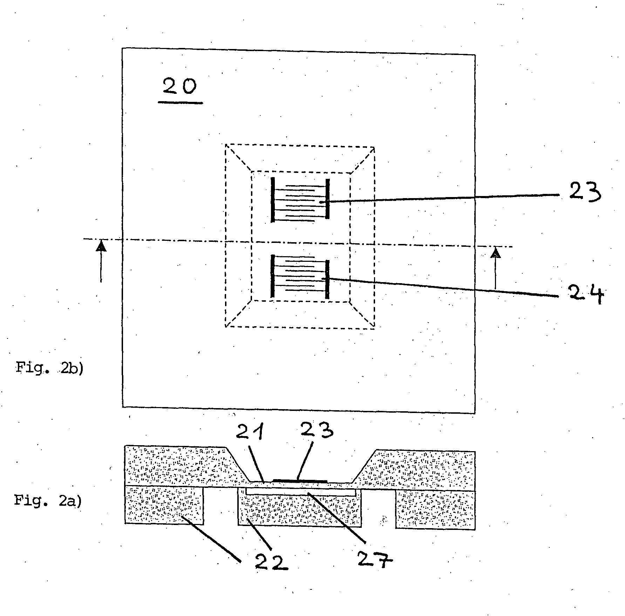

Bei den in Figur 2a) und b) gezeigten Ausführungsbeispiel ist die die mechanische Verformung der mikromechanischen Membran- oder Brückenstruktur 21 bewirkende Wandlereinrichtung durch eine Oberflächenwellen-Wandlereinrichtung gebildet, welche zwei an der mikromechanischen Membran- oder Brückenstruktur 21 angeordnete Interdigital-Kondensatoren 23 bzw. 24 umfasst. Der erste Interdigital-Kondensator 23 dient zum Erzeugen von Oberflächenwellen in Ansprache auf ein diesem von außen zugeführtes elektrisches Erregungssignal vorgegebener Art und Größe, der zweite Interdigital-Kondensator 24 dient zum Empfangen der von dem ersten Interdigital-Kondensator 23 erzeugten, sich an der Membran 21 fortpflanzenden Oberflächenwellen. Die Oberflächenwellen bedeuten eine sich zeitlich verändernde mechanische Verformung der mikromechanischen Membran- oder Brückenstruktur 21, welche vom Zustand und vom Maß der Verspannung der Membran 21 abhängig ist.

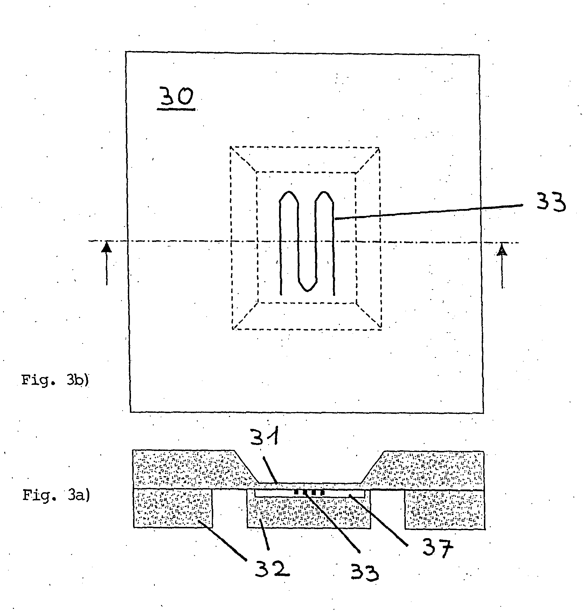

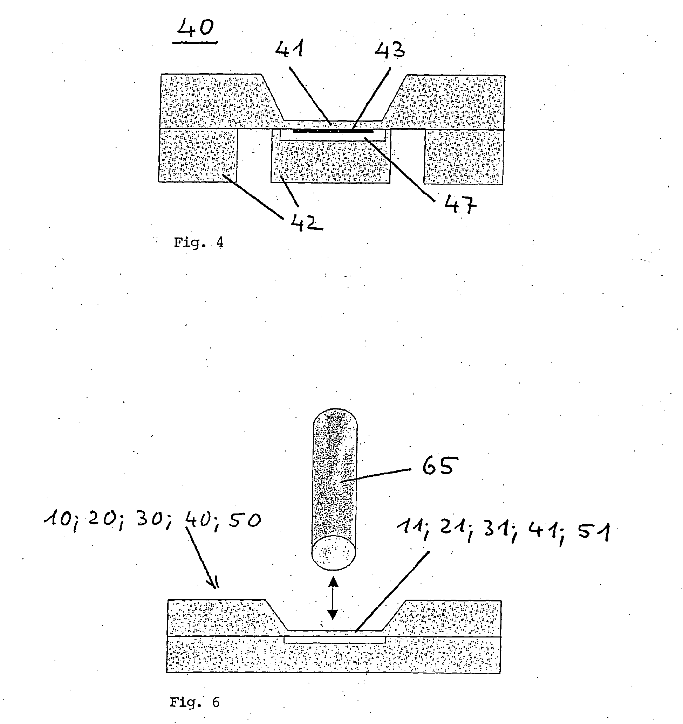

Bei dem in Figur 3a) und b) dargestellten Ausführungsbeispiel und bei dem in Figur 4 dargestellten Ausführungsbeispiel ist die die mechanische Verformung der mikromechanischen Membran- oder Brückenstruktur 31 bzw. 41 bewirkende Wandlereinrichtung durch eine Heizeinrichtung 33 bzw. 43 gebildet, welche mit der Membran 31 bzw. 41 im Sinne einer temperaturabhängigen mechanischen Verformung zusammenwirkt.

Bei dem in Figur 3a) und b) dargestellten Ausführungsbeispiel bewirkt die Heizeinrichtung 33 eine Temperaturerhöhung der Membran 31, wodurch diese sich ausdehnt und verformt. Das Maß der Ausdehnung und Verformung der Membran 31 kann verstärkt werden, wenn diese ein Bimetall-Element enthält oder durch ein solches gebildet ist.

Bei dem in Figur 4 dargestellten Ausführungsbeispiel ist die Membran 41 durch eine Formgedächtnislegierung gebildet, welche eine der jeweiligen vorliegenden Temperatur entsprechende Form annimmt.

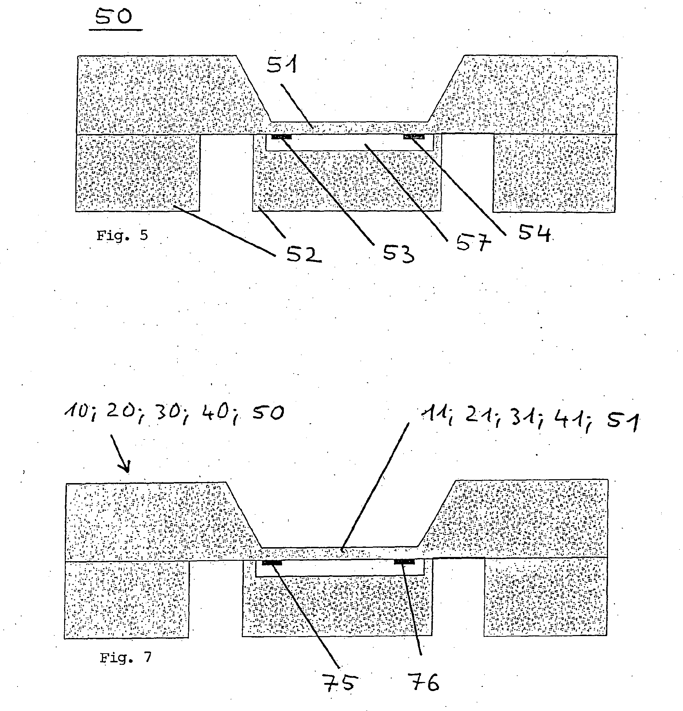

Bei dem in Figur 5 gezeigten Ausführungsbeispiel erfolgt die Verformung der mikromechanischen Membran- oder Brückenstruktur 51 durch eine Wandlereinrichtung, welche Piezo-Wandler 53, 54 enthält. Entsprechend einer von außen als Erregungssignal an die Piezo-Wandler 53, 54 angelegten Gleich- oder Wechselspannung vorgegebener Art und Größe erfolgt eine Verformung der Membran 51.

Die bei den in den Figuren 1 bis 5 dargestellten mikromechanischen Sensoren 10; 20; 30; 40; 50 werden die durch die Wandlerstrukturen 13, 14; 23, 24; 33; 43; 53, 54 in Ansprache auf das von außen zugeführte Erregungssignal erzeugten mechanischen Verformungen der mikromechanischen Membran- oder Brückenstruktur 11; 21; 31; 41; 51 erfasst und mit einem für das jeweilige Erregungssignal erwarteten Wert der mechanischen Verformung verglichen, um daraus ein Selbsttest-Ergebnissignal abzuleiten und/oder eine automatische Kalibrierung der mikromechanischen Membran- oder Brückenstruktur 11; 21; 31; 41; 51 durchzuführen.

Die mechanische Verformung der mikromechanischen Membran- oder Brückenstruktur 11; 21; 31; 41; 51 kann entweder mit derselben Wandlereinrichtung erfasst werden, mit der sie erzeugt wird, oder sie kann mit einer anderen Wandlereinrichtung erfasst werden, als mit der sie erzeugt wird.

Bei den in den Figuren 1 und 2 dargestellten Ausführungsbeispielen wird die mechanische Verformung der mikromechanischen Membran- oder Brückenstruktur 11; 21 mit derselben Wandlereinrichtung 13, 14; 23, 24 erfasst, mit der sie erzeugt wird.

So wird bei dem in Figur 1 gezeigten Ausführungsbeispiel die mechanische Verformung der Membran 11 durch eine elektrostatische Anziehung bzw. Abstoßung zwischen den Elektroden 13, 14 herbeigeführt und die Erfassung der mechanischen Verformung erfolgt durch Kapazitätsmessung zwischen denselben Elektroden.

Bei dem Ausführungsbeispiel der Figur 2 werden durch den einen Interdigital-Kondensator 23 die Oberflächenwellen erzeugt und durch den anderen Interdigital-Kondensator 24 empfangen. Die Erfassung der Verformung der Membran 21 kann durch Korrelation des dem einen Interdigital-Kondensator 23 zugeführten Erregungssignals mit dem von dem anderen Interdigital-Kondensator 24 erhaltenen Signal nach Dämpfung und Phasenlage erfolgen, oder durch Korrelation des der Oberflächenwellen-Wandlereinrichtung 23, 24 zugeführten Erregungssignals mit einem anderen die Verformung der Membran 21 anzeigenden Signal, beispielsweise einem Piezo-Signal, oder einem optischen oder kapazitiven Signal.

Bei den in den Figuren 3 und 4 dargestellten Ausführungsbeispielen wird die mechanische Verformung der mikromechanischen Membran- oder Brückenstruktur 31; 41 durch das Zusammenwirken der Heizeinrichtung 33; 43 mit der Membran 31; 41 herbeigeführt, die Erfassung der Verformung erfolgt mittels einer weiteren Wandlereinrichtung, beispielsweise wieder durch ein Piezo-Signal, ein optisches oder ein kapazitives Signal.

Bei dem in Figur 5 dargestellten Ausführungsbeispiel erfolgt die Auslenkung der mikromechanischen Membran- oder Brückenstruktur 51 durch Piezo-Wandler 53, 54, die Erfassung der mechanischen Verformung kann wiederum auf piezoelektrischem Wege, elektrostatisch oder optisch erfolgen.

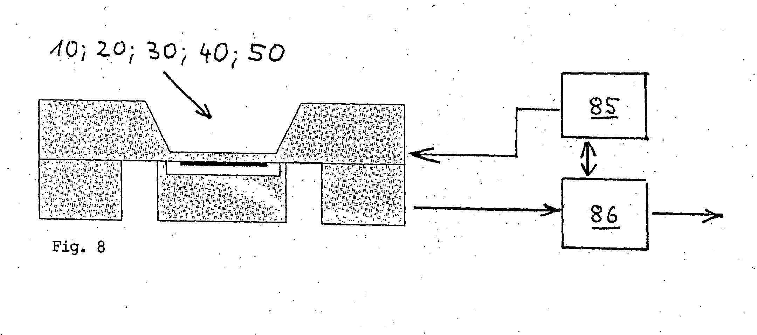

Figur 6 zeigt eine Anordnung, bei der eine auf beliebige Weise herbeigeführte mechanische Verformung einer mikromechanischen Membran- oder Brückenstruktur 11; 21; 31; 41; 51, die durch eine elektrostatische Wandlereinrichtung, eine Oberflächenwellen-Wandlereinrichtung, eine thermisch arbeitende Wandlereinrichtung oder durch eine piezoelektrische Wandlereinrichtung bewirkt werden kann, wie bei den Ausführungsbeispielen der Figuren 1 bis 5 der Fall, durch eine optische Wandlereinrichtung 65 ausgelesen wird. Dies kann auf verschiedene Weise erfolgen, beispielsweise durch Auswertung von optischen Interferenzen zwischen der verformten Membran 11; 21; 31; 41; 51 und dem diese tragenden Trägerteil 12; 22; 32; 42; 52, was einer Messung der Auslenkung der Membran 11; 21; 31; 41; 51 gegenüber dem Trägerteil 12; 22; 32; 42; 52 entspricht.

Die Durchführung des Selbsttests und/oder der automatischen Kalibrierung der mikromechanischen Membran- oder Brückenstruktur 11; 21; 31; 41; 51 erfolgt in einer Verarbeitungsschaltung 86, welche die erfasste mechanische Verformung der mikromechanischen Membran- oder Brückenstruktur 11; 21; 31; 41; 51 mit dem derselben von einer Erregungssignalerzeugungseinrichtung 85 zugeführten, diese mechanische Verformung bewirkenden Erregungssignal vergleicht, wie in Figur 8 schematisiert und sehr stark vereinfacht dargestellt ist.

Durch die Selbsttestfähigkeit kann eine sofortige Fehlermeldung bei Ausfall oder Degradation des die mikromechanische Membran- oder Brückenstruktur enthaltenden Bauteils erfolgen. Die Möglichkeit der automatischen Kalibrierung macht gestattet es eine Kalibrierung jederzeit durchzuführen und eine Veränderung des Bauteils auszugleichen.

Die vorstehend im Zusammenhang mit mikromechanischen Drucksensoren beschriebenen Möglichkeiten sind anwendbar auf jedwede Art von Sensoren oder Aktoren oder sonstigen Bauteilen oder Einrichtungen, die mit mikromechanischen Membran- oder Brückenstrukturen arbeiten.

### Bezugszeichenliste

- 10; 20; 30; 40; 50: mikromechanischer Sensor
- 11; 21; 31; 41; 51: mikromechanische Membran- oder Brückenstruktur
- 12; 22; 32; 42; 52: Trägerteil
- 13: Elektrode
- 14: Elektrode
- 17; 27; 37; 47; 57: Hohlraum
- 23: Interdigital-Kondensator
- 24: Interdigital-Kondensator
- 33: Heizeinrichtung
- 43: Heizeinrichtung
- 53: Piezo-Wandler
- 54: Piezo-Wandler
- 65: optische Wandlereinrichtung
- 75: Piezo-Widerstand
- 76: Piezo-Widerstand
- 85: Erregungssignalerzeugungseinrichtung
- 86: Verarbeitungsschaltung

## Patentansprüche

1. Mikromechanische Membran- oder Brückenstruktur, insbesondere mikromechanischer Sensor oder Aktor, **gekennzeichnet durch** eine an der mikromechanischen Membran- oder Brückenstruktur (11; 21; 31; 41; 51) vorgesehene Wandlerstruktur (13, 14; 23, 24; 33, 43; 53, 54) zur Erzeugung einer mechanischen Verformung der mikromechanischen Membran- oder Brückenstruktur (11; 21; 31; 41; 51) in Ansprache auf ein von außen zugeführtes Signal vorgegebener Art und Größe, und eine Einrichtung zur Erfassung der mechanischen Verformung der mikromechanischen Membran- oder Brückenstruktur (11; 21; 31; 41; 51).

2. Mikromechanische Membran- oder Brückenstruktur nach Anspruch 1, **gekennzeichnet durch** eine Verarbeitungsschaltung (86) zum Vergleich der erfassten mechanischen Verformung mit einem für das von außen zugeführte Signal bestimmter Art und Größe erwarteten Wert der mechanischen Verformung und zur Erzeugung eines das Ergebnis des Vergleiches anzeigenden Selbsttest-Ergebnissignals.

3. Mikromechanische Membran- oder Brückenstruktur nach Anspruch 1 oder 2, **dadurch gekennzeichnet, dass** die Wandlereinrichtung zur Erzeugung der mechanischen Verformung eine elektrostatische Wandlereinrichtung (13, 14) oder ein piezoelektrische Wandlereinrichtung (53, 54) ist.

4. Mikromechanische Membran- oder Brückenstruktur nach Anspruch 3, **dadurch gekennzeichnet, dass** die elektrostatischen Wandlereinrichtung (13, 14) eine an der mikromechanischen Membran- oder Brückenstruktur (11) angeordnete Elektrode (13) und eine dieser gegenüberliegend an einem Trägerteil (12) der mikromechanischen Membran- oder Brückenstruktur (11) angeordnete Elektrode (14) enthält.

5. Mikromechanische Membran- oder Brückenstruktur nach Anspruch 1 oder 2, **dadurch gekennzeichnet, dass** die Wandlereinrichtung zur Erzeugung der mechanischen Verformung eine Oberflächenwellen-Wandlereinrichtung (23, 24) ist.

6. Mikromechanische Membran- oder Brückenstruktur nach Anspruch 5, **dadurch gekennzeichnet, dass** die Oberflächenwellen-Wandlereinrichtung (23, 24) mindestens einen an der mikromechanischen Membran- oder Brückenstruktur (21) angeordneten Interdigital-Kondensator (23, 24) enthält.

7. Mikromechanische Membran- oder Brückenstruktur nach Anspruch 6, **dadurch gekennzeichnet, dass** die Oberflächenwellen-Wandlerstruktur (23, 24) einen ersten, an der mikromechanischen Membran- oder Brückenstruktur (21) angeordneten Interdigital-Kondensator (23) zum Erzeugen der Oberflächenwellen und einen zweiten, an der mikromechanischen Membran- oder Brückenstruktur (21) angeordneten Interdigital-Kondensator (24) zum Empfangen der Oberflächenwellen enthält.

8. Mikromechanische Membran- oder Brückenstruktur nach Anspruch 1 oder 2, **dadurch gekennzeichnet, dass** die Wandlereinrichtung zur Erzeugung der mechanischen Verformung eine thermische Wandlereinrichtung mit einer an der mikromechanischen Membran- oder Brückenstruktur angeordneten Heizeinrichtung (33; 43) enthält.

9. Mikromechanische Membran- oder Brückenstruktur nach Anspruch 8, **dadurch gekennzeichnet, dass** die thermische Wandlereinrichtung ein in der mikromechanischen Membran- oder Brückenstruktur (31) angeordnetes Bimetallelement enthält.

10. Mikromechanische Membran- oder Brückenstruktur nach Anspruch 8, **dadurch gekennzeichnet, dass** die Wandlereinrichtung zur Erzeugung der mechanischen Verformung eine beheizbare Formgedächtnislegierung enthaltende Wandlerstruktur umfasst, die durch eine Heizeinrichtung (43) beheizbar ist.

11. Mikromechanische Membran- oder Brückenstruktur nach einem der Ansprüche 1 bis 7, **dadurch gekennzeichnet, dass** die zur Erzeugung der mechanischen Verformung vorgesehene Wandlereinrichtung (13, 14; 23, 24; 53, 54) auch zur Erfassung der mechanischen Verformung vorgesehen ist.

12. Mikromechanische Membran- oder Brückenstruktur nach einem der Ansprüche 1 bis 10, **dadurch gekennzeichnet, dass** eine von der zum Erzeugen der mechanischen Verformung vorgesehenen Wandlereinrichtung (13, 14; 23, 24; 33; 43) verschiedene weitere Wandlereinrichtung (65; 75, 76) zum Erfassen der mechanischen Verformung vorgesehen ist.

13. Mikromechanische Membran- oder Brückenstruktur nach Anspruch 12, **dadurch gekennzeichnet, dass** eine optische Wandlereinrichtung (65) zur Erfassung der mechanischen Verformung vorgesehen ist.

14. Mikromechanische Membran- oder Brückenstruktur nach Anspruch 13, **dadurch gekennzeichnet, dass** die optische Wandlereinrichtung (65) zur Erfassung von optischen Interferenzen zwischen der verformten mikromechanischen Membran- oder Brückenstruktur (11; 21; 31; 41; 51) und einem diese tragenden Trägerteil (12; 22; 32; 42; 52) vorgesehen ist.

15. Mikromechanische Membran- oder Brückenstruktur nach Anspruch 11 oder 12, **dadurch gekennzeichnet, dass** die Wandlereinrichtung zur Erfassung der mechanischen Verformung durch Kapazitätsmessung zwischen an der mikromechanischen Membran- oder Brückenstruktur (11) und an einem diese tragenden Trägerteil (12) angeordneten Elektroden (13, 14) vorgesehen ist.

16. Mikromechanische Membran- oder Brückenstruktur nach Anspruch 11 oder 12, **dadurch gekennzeichnet, dass** zur Erfassung der mechanischen Verformung eine piezoelektrische Wandlereinrichtung (53, 54; 75, 76) vorgesehen ist.

17. Mikromechanische Membran- oder Brückenstruktur nach Anspruch 5, 6 oder 7 in Verbindung mit Anspruch 2 und einem der Ansprüche 8 bis 12, **dadurch gekennzeichnet, dass** die Verarbeitungsschaltung (86) zur Erzeugung des Selbsttest-Ergebnissignal unter Korrelierung der erfassten mechanischen Verformung und eines der Oberflächenwellen-Wandlereinrichtung (23; 24) zugeführten Erregungssignals nach Dämpfung und Phasenlage vorgesehen ist.

18. Mikromechanische Membran- oder Brückenstruktur nach einem der Ansprüche 2 bis 17, **dadurch gekennzeichnet, dass** die Verarbeitungsschaltung (86) für eine automatische Kalibrierung der mikromechanischen Membran- oder Brückenstruktur (11; 21; 31; 41; 51) unter Verwendung des von außen zugeführten Erregungssignals und der erfassten Verformung vorgesehen ist.

19. Verfahren zum Selbsttest einer mikromechanischen Membran- oder Brückenstruktur, insbesondere eines mikromechanischen Sensors oder Aktors, **dadurch gekennzeichnet, dass** mittels einer an der mikromechanischen Membran- oder Brückenstruktur (11; 21; 31; 41; 51) vorgesehenen Wandlerstruktur (13, 14; 23, 24; 33; 43; 53, 54) in Ansprache auf ein von außen zugeführtes Signal vorgegebener Art und Größe eine mechanische Verformung der mikromechanischen Membran- oder Brückenstruktur (11; 21; 31; 41; 51) erzeugt wird, dass die mechanischen Verformung der mikromechanischen Membran- oder Brückenstruktur (11; 21; 31; 41; 51) erfasst wird, und dass die erfasste mechanische Verformung mit einem für das von außen zugeführte Signal bestimmter Art und Größe erwarteten Wert der mechanischen Verformung verglichen und ein das Ergebnis des Vergleichs anzeigendes Selbsttest-Ergebnissignal erzeugt wird.

20. Verfahren nach Anspruch 19, **dadurch gekennzeichnet, dass** die mechanische Verformung der mikromechanischen Membran- oder Brückenstruktur (11) durch eine elektrostatische Wandlereinrichtung (13, 14) erzeugt wird.

21. Verfahren nach Anspruch 19, **dadurch gekennzeichnet, dass** die mechanische Verformung der mikromechanischen Membran- oder Brückenstruktur (51) durch eine piezoelektrische Wandlereinrichtung (53, 54) erzeugt wird.

22. Verfahren nach Anspruch 19, **dadurch gekennzeichnet, dass** die mechanische Verformung der mikromechanischen Membran- oder Brückenstruktur (21) durch eine Oberflächenwellen-Wandlereinrichtung (23, 24) erzeugt wird.

23. Verfahren nach Anspruch 19, **dadurch gekennzeichnet, dass** die mechanische Verformung der mikromechanischen Membran- oder Brückenstruktur (31; 41) durch eine thermische Wandlereinrichtung (33; 43) erzeugt wird.

24. Verfahren nach Anspruch 23, **dadurch gekennzeichnet, dass** die mechanische Verformung der mikromechanischen Membran- oder Brückenstruktur (31; 41) durch eine beheizbare Formgedächtnislegierung oder ein Bimetall-Element enthaltende Wandlerstruktur erzeugt wird.

25. Verfahren nach einem der Ansprüche 19 bis 22, **dadurch gekennzeichnet, dass** die mechanische Verformung der mikromechanischen Membran- oder Brückenstruktur (11; 21; 51) mit derselben Wandlereinrichtung (13, 14; 23, 24; 53, 54) erfasst wird, mit der sie erzeugt wird.

26. Verfahren nach einem der Ansprüche 19 bis 24, **dadurch gekennzeichnet, dass** die mechanische Verformung der mikromechanischen Membran- oder Brückenstruktur (11; 21; 31; 41) mit einer anderen Wandlereinrichtung (65; 75, 76) erfasst wird, als mit der sie erzeugt wird.

27. Vertahren nach Anspruch 26, **dadurch gekennzeichnet, dass** die mechanische Verformung der mikromechanischen Membran- oder Brückenstruktur (11; 21; 31; 41; 51) auf optischem Wege erfasst wird.

28. Verfahren nach Anspruch 27, **dadurch gekennzeichnet, dass** die mechanische Verformung durch Auswertung von optischen Interferenzen zwischen der verformten mikromechanischen Membran- oder Brückenstruktur (11; 21; 31; 41; 51) und einem diese tragenden Trägerteil (12; 22; 32; 42; 52) erfasst wird.

29. Verfahren nach Anspruch 25 oder 26, **dadurch gekennzeichnet, dass** die mechanische Verformung durch Kapazitätsmessung zwischen an der mikromechanischen Membran- oder Brückenstruktur (11) und an einem diese tragenden Trägerteil (12) angeordneten Elektroden (13, 14) erfasst wird.

30. Verfahren nach Anspruch 25 oder 26, **dadurch gekennzeichnet, daß** die mechanische Verformung der mikromechanischen Membran- oder Brückenstruktur mittels einer piezoelektrischen Wandlereinrichtung (53, 54; 75, 76) erfasst wird.

31. Verfahren nach Anspruch 22 in Verbindung mit einem der Ansprüche 26 bis 30, **dadurch gekennzeichnet, dass** die mechanische Verformung der mikromechanischen Membran- oder Brückenstruktur (21) erfasst und nach Dämpfung und Phasenlage mit einem der Oberflächenwellen-Wandlereinrichtung (23, 24) zugeführten Erregungssignal korreliert wird.

32. Verfahren nach einem der Ansprüche 19 bis 31, **dadurch gekennzeichnet, dass** mittels des von außen zugeführten Erregungssignals und der erfassten mechanischen Verformung eine automatische Kalibrierung der mikromechanischen Membran- oder Brückenstruktur (11; 21; 31; 41; 51) durchgeführt wird.
